# EUROPEAN PATENT SPECIFICATION

(11) **EP 3 214 252 B1**
(45) Date of publication and mention of the grant of the patent: **03.04.2019**
(21) Application number: 15855863.5
(22) Date of filing: 30.10.2015
(51) Int. Cl.: E06B 3/663, C03C 27/06, E06B 3/67, E06B 3/667

(54) **MULTIPLE GLASS SASH**
MEHRFACHGLASFLÜGEL
CHÂSSIS À VITRES MULTIPLES

(30) Priority: 30.10.2014 JP 2014221621
(43) Date of publication of application: 06.09.2017
(73) Proprietor: AGC-Lixil Window Technology Co., Ltd., Tokyo 136-0072 (JP)
(72) Inventor: KITAHARA, Etsushi, Tokyo 136-0072 (JP); HARAGUCHI, Hiromitsu, Tokyo 136-0072 (JP); USUI, Yuichi, Tokyo 136-0072 (JP); KUJIME, Toshiyuki, Tokyo 136-0072 (JP); YOKOYAMA, Kazuyoshi, Tokyo 136-0072 (JP); YOSHIMOTO, Atsushi, Tokyo 136-0072 (JP); HATTA, Koichi, Tokyo 136-0072 (JP)
(74) Representative: Müller-Boré & Partner Patentanwälte PartG mbB
(86) International application number: PCT/JP2015/080785
(87) International publication number: WO 2016/068309

(56) References cited:
- WO-A1-2010/043828
- DE-A1-102008 063 396
- JP-A- 2003 335 556
- JP-A- 2012 505 984
- JP-A- 2014 196 642

## Description

The present relates to a multiple glazing sash which is constituted by five glass plates held to be spaced apart by a spacer being a first frame member.

In a case where a window glass is used as an outer wall of a building, in order to increase the efficiency for indoor heating and cooling, a predetermined thermal insulation performance (heat transmission coefficient: U value (JIS R3107: 1998 years), unit: W/m²·K) is required. Therefore, in recent years, a double glazing (see Patent Document 1) having high thermal insulation performance (i.e. a low U value) as compared with a single glazing glass plate tends to be used as a glass plate for the window glass.

In the meantime, the applicant of the present application has proposed, in Patent Document 2, a multiple glazing sash constituted by four or more glass plates held to be spaced apart by one spacer. The multiple glazing sash of Patent Document 2 is constructed by disposing two or three intermediate plates (intermediate glass plates) to be spaced apart in a hollow space between a first glass plate and a second glass plate. According to this multiple glazing sash, as compared to the double glazing made of two glass plates, the thickness of the hollow space which contributes to thermal insulation performance, is increased, whereby the thermal insulation performance is improved.

On the other hand, Patent Document 3 discloses an insulating glass unit comprising a pair of glass panes and two polymer sheets each including a low-emissivity metal layer. The two polymer sheets are provided on a frame in parallel as spaced between said pair of glass panes, and the thermal insulation performance is enhanced by the low-emissivity metal layers provided on the two polymer sheets.

### PRIOR ART DOCUMENTS

### PATENT DOCUMENTS

Patent Document 1: JP-A-2014-133675
Patent Document 2: JP-A-2014-196642
Patent Document 3: JP-A-2014-500223

In the multiple glazing sash of Patent Document 2 comprising four or more glass plates, in order to further improve the thermal insulation performance, it is considered to constitute all glass plates by Low-E (low-emissivity) glass.

However, the applicant of the present application has confirmed by experiments and simulation analyses that since Low-E glass has a property to absorb solar heat, there is such a risk that thermal breakage occurs in intermediate glass plates composed of two or more glass plates.

Thermal breakage is a phenomenon that occurs when the tensile stress at an edge caused by a temperature difference between the main surface and the edge of a glass plate exceeds an allowable value.

That is, an intermediate glass plate disposed in the hollow space is likely that by a temperature rise of the hollow space due to sunlight, particularly due to solar radiation of the morning sun, or by its own characteristic of absorbing the solar heat, the temperature of the main surface tends to be rapidly raised more than the temperature of the edge. Therefore, the intermediate glass plate has a higher risk of thermal breakage than the first glass plate and the second glass plate. Further, in the multiple glazing sash wherein all three intermediate glass plates are Low-E glass, it has been confirmed that the edge stress of the intermediate glass plate disposed at the center, becomes higher than the edge stress of the other two intermediate glass plates.

To prevent thermal breakage, the intermediate glass plate may be made of a usual transparent glass plate having a large emissivity, but, with such a usual glass, there has been such a problem that the thermal insulation performance is lowered because solar heat is transmitted.

The insulating glass unit of Patent Document 3 uses polymer sheets, whereby the problem of thermal breakage does not occur. Further, Patent Document 3 does not disclose a problem with respect to preventing thermal breakage of intermediate glass plates when using the intermediate glass plates in place of the polymer sheets.

The present invention has been made in view of such circumstances, and it is an object of the present invention to provide, as a multiple glazing sash comprising four or more glass plates, a multiple glazing sash which is capable of preventing thermal breakage of intermediate glass plates while securing thermal insulation
performance. Document WO2010/043828-A1 and document DE102008063396-A1 disclose multiple glazing units having no more than four panes of glass. Panes of the glazings disclosed in these documents have low-emissivity coating coated thereon.

The subject matter of the present invention is characterized in the claims.

The present invention provides, in order to accomplish the above object, a multiple glazing sash having a first glass plate and a second glass plate held at their periphery by a first frame member, to be spaced apart to form a hollow space, the hollow space being sealed by the first frame member at said periphery, and in the hollow space, three intermediate glass plates being held by the first frame member, wherein each of the first glass plate and the second glass plate has a low-emissivity film, at least one intermediate glass plate among the above three intermediate glass plates has a low-emissivity film, and one intermediate glass plate disposed at the center among the three intermediate glass plates, is a transparent glass plate having no low-emissivity film.

According to the present invention, the first glass plate, the second glass plate, and at least one among the three intermediate glass plates, are made of Low-E glass having a low-emissivity film, whereby the thermal insulation performance will be improved. Then, one intermediate glass plate disposed at the center among the three intermediate glass plates is made by a transparent glass plate having no low-emissivity film, so as to let solar radiation heat be transmitted therethrough and to prevent the temperature rise of the glass plate and the temperature rise of the hollow space, thereby to prevent the temperature rise of one or more other intermediate glass plates as Low-E glass. Thus, according to the present invention, in a multiple glazing sash comprising five glass plates, it is possible to prevent thermal breakage of the intermediate glass plates while securing thermal insulation performance.

One embodiment of the present invention is preferably the multiple glazing sash which has such a construction that the first glass plate is disposed on the outdoor side of a building, and the second glass plate is disposed on the indoor side of the building, wherein the emissivity of the first glass plate disposed on the outdoor side is lower than the emissivity of the second glass plate and the intermediate glass plate having a low-emissivity film.

According to one embodiment of the present invention, since the transmittance of solar radiation heat becomes low by the first glass plate, it is possible to suppress the temperature rise of the hollow space by solar radiation heat, and it is possible to suppress the temperature rise of the intermediate glass plates. Further, the emissivity of the intermediate glass plate being Low-E glass is higher than the emissivity of the first glass plate, whereby it is possible to suppress the temperature rise of the intermediate glass plate being Low-E glass due to absorption of solar radiation heat.

A multiple glazing sash wherein all of three intermediate glass plates are Low-E glass, has such a tendency that the edge stress of the intermediate glass plate disposed at the center becomes higher than the edge stress of the two other intermediate glass plates. Therefore, according to the present invention, the one intermediate glass plate disposed at the center is made to be a transparent glass plate having no low-emissivity film, whereby it is possible to suppress the increase of the edge stress of the one intermediate glass plate disposed at the center, and it is possible to prevent thermal breakage.

One embodiment of the present invention is preferably provided with a second frame member for supporting the first frame member, said second frame member has hollows, and a thermal insulation material is disposed in the hollows.

According to one embodiment of the present invention, due to the temperature rise of the hollow space, the first frame member tends to be expanded, but since the first frame member is supported and reinforced by the second frame member, it is possible to suppress the movement of the first frame member to expand to the opposite side of the hollow space. And, since a thermal insulation material is disposed in the hollows of the second frame member, it is possible to suppress the temperature drop of the glass edge at night, and it is possible to reduce the temperature difference between the main surface and the edge of an intermediate glass plate. Thus, it is possible to further suppress thermal breakage of the intermediate glass plate.

According to the multiple glazing sash of the present invention, in a multiple glazing sash comprising five glass plates, it is possible to prevent thermal breakage of intermediate glass plates while securing thermal insulation performance.

### BRIEF DESCRIPTION OF DRAWINGS

Fig. 1 is a cross-sectional view of a lower portion of a window having the multiple glazing sash of the embodiment applied.
Fig. 2 is an overall perspective view of the multiple glazing sash shown in Fig. 1.
Fig. 3 is a vertical cross-sectional view of the lower portion of the multiple glazing sash shown in Fig. 2.
Fig. 4 is a perspective view of a corner key to connect spacers to each other
Fig. 5 is a perspective view of a corner key to connect support plates to each other.
Fig. 6 is a schematic diagram of the main part showing a state where spacers and the corner key are connected by screws, and a state where support plates and the corner key are connected by screws.

The multiple glazing sash according to the embodiment of the present invention will be described with reference to the accompanying drawings.

Here, the drawings are an illustration of a preferred embodiment of the present invention, and the present invention is not limited to the drawings for illustration and their description.

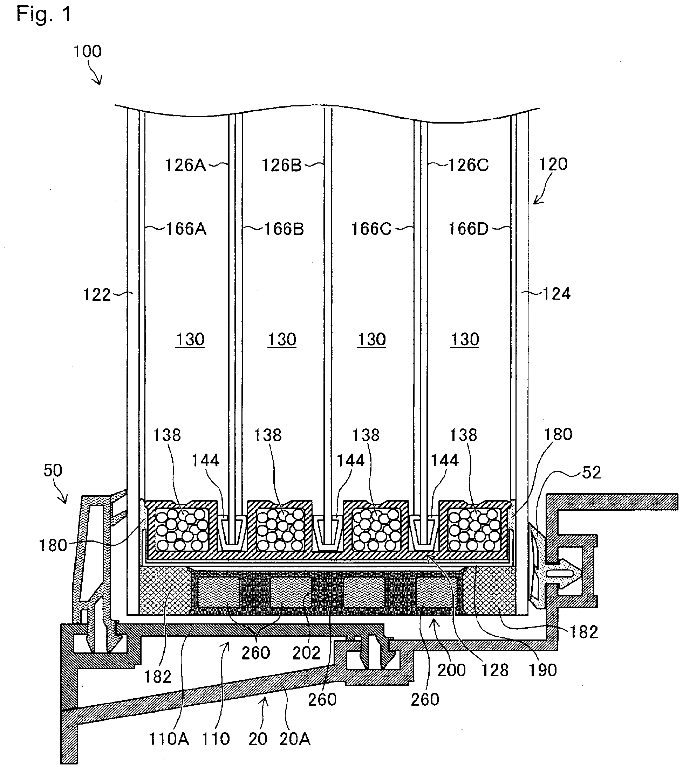

Fig. 1 is a vertical cross-sectional view of a lower portion of a window 100 having the multiple glazing sash 120 of the embodiment mounted thereon.

The window 100 is constructed by mounting, inside an existing window frame 20 attached at an opening of a building body, an attachment frame 110 from the outdoor side to the window frame 20, and mounting the multiple glazing sash 120 of the embodiment to the attachment frame 110.

The window frame 20 is constructed by four-way framework of a lower frame 20A and an upper frame and left and right vertical frames (not shown), and each frame member of the window frame 20 is fixed to the building body by screws. The attachment frame 110 is likewise constituted by four-way framework of a lower frame 110A and an upper frame and left and right vertical frames (not shown).

Further, reference numeral 50 in Fig. 1 represents a batten on the outdoor side, and reference numeral 52 represents an air-tight material on the indoor side. The window frame 20 and the attachment frame 110 of the embodiment are each an extruded profile of a hard synthetic resin material or aluminum alloy, and in the illustrated example, the window frame 20 and the attachment frame 110 are window frames for a FIX window that can not be opened or closed. Here, the application of the multiple glazing sash 120 of the embodiment is not limited to the FIX window, and it can be applied to windows of other forms, such as sliding window, etc.

The multiple glazing sash 120 is one constructed by using a frame member having the after-described four spacers integrated and disposing five glass plates to be spaced apart, so as to be expected to exhibit thermal insulation performance at the maximum level. Further, in the hollow space divided in four hollow spaces as described later, an argon gas having a smaller thermal conductivity than air is sealed, whereby the thermal insulation performance is further improved. Here, the multiple glazing sash 120 is one included in the scope of insulating glass sash, and includes one constructed by disposing four or more glass plates to be spaced apart.

### [Overall construction of multiple gazing sash 120]

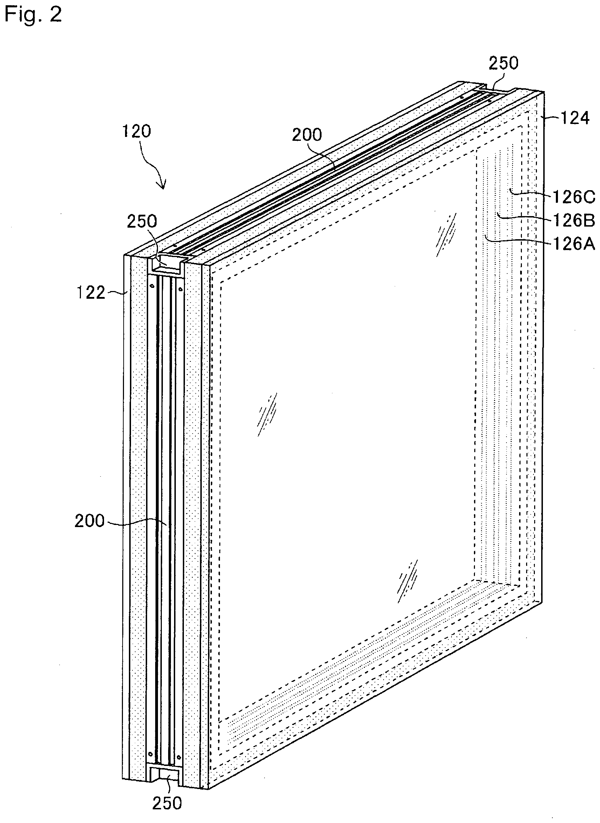

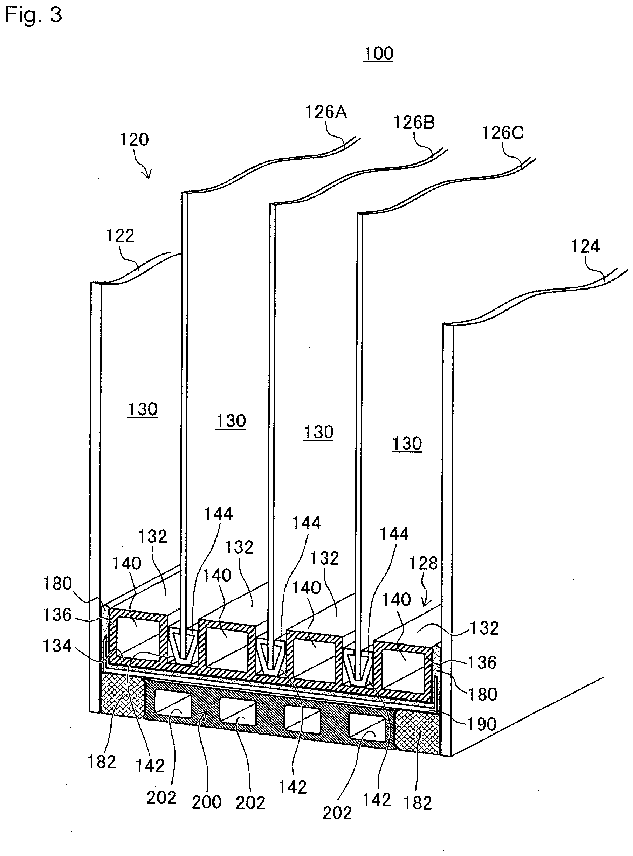

Fig. 2 is an overall perspective view of the multiple glazing sash 120, and Fig. 3 is a vertical cross-sectional view of the lower portion of the multiple glazing sash 120.

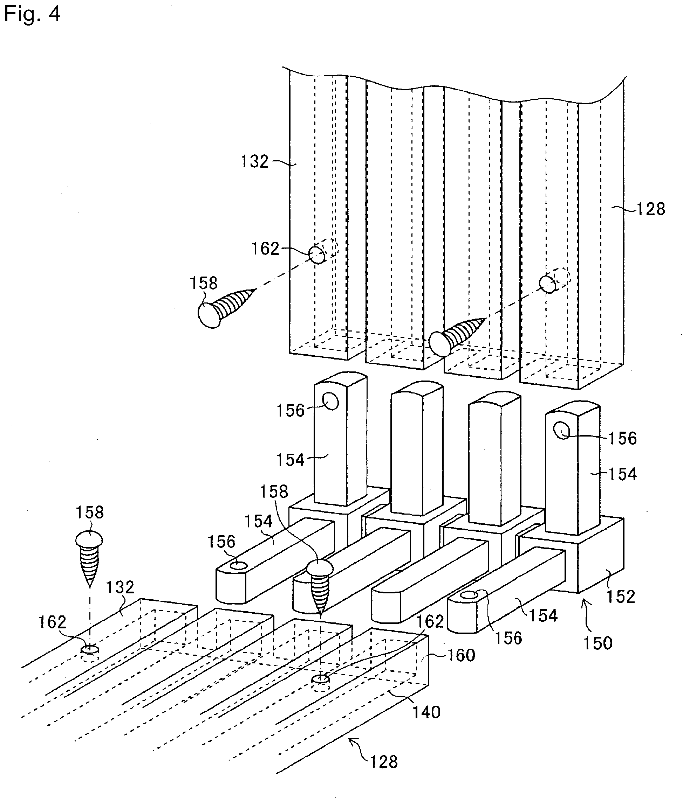

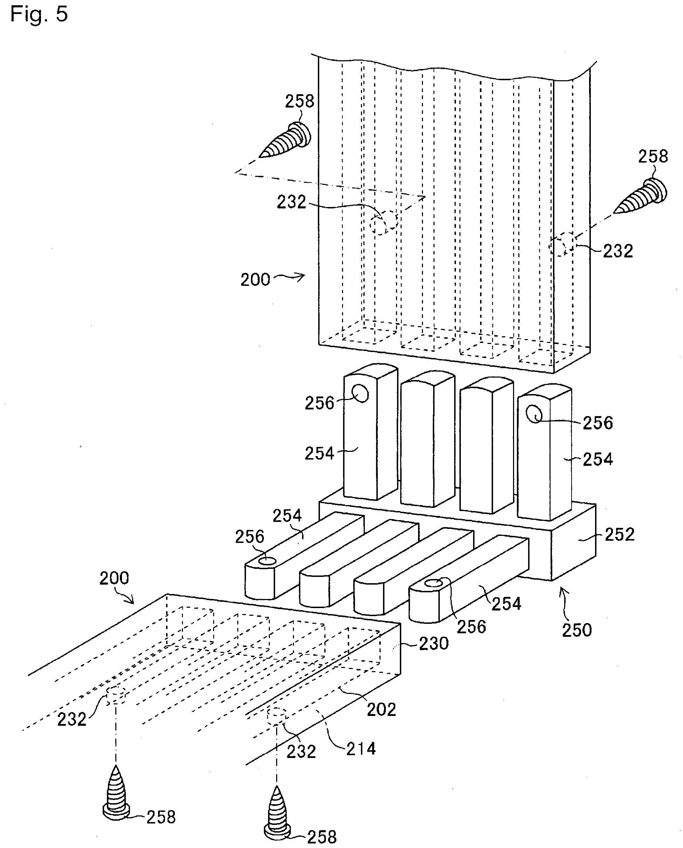

As shown in Figs. 2 and 3, the multiple glazing sash 120 comprises a glass plate (i.e. first glass plate) 122 disposed on the outdoor side of a building, a glass plate (i.e., second glass plate) 124 disposed on the indoor side, three intermediate glass plates 126A, 126B and 126C disposed between the glass plate 122 and the glass plate 124, a spacer (i.e. first frame member) 128 for holding the glass plate 122 and the glass plate 124 to be spaced apart, and the intermediate glass plates 126A, 126B and 126C to be spaced apart, and a support plate (i.e. second frame member) 200 for supporting the spacer 128 from the outside. As shown in Figs. 4 and 5, at four corners being corners of the glass plate 122 and the glass plate 124, where the respective ends of four spacers 128 are abutted respectively, the abutted ends of the spacers 128 are connected to each other, respectively, by corner keys (also referred to as corner pieces) 150 as spacer-connecting members to form a frame shape, and also at four corners where the respective ends of four support plates 200 are abutted respectively, the abutted ends of the support plates 200 are connected to each other, respectively, by corner keys (also referred to as corner pieces) 250 as support plate-connecting members, to form a frame shape.

The intermediate glass plates 126A, 126B and 126C may, collectively, be simply referred to as the intermediate glass plate(s) 126.

The glass plate 122 and the glass plate 124 are held to be spaced apart by the spacer 128 at their periphery. Thus, a hollow space is formed between the glass plate 122 and the glass plate 124. The hollow space formed by the glass plate 122 and the glass plate 124 is sealed by the spacer 128 at the periphery, and at the same time, three intermediate glass plates 126A, 126B and 126C are disposed to be spaced apart, so that the hollow space is divided into four divided hollow spaces 130. The support plate 200 is disposed to be along the outer surface of the spacer 128, on the opposite side to the inner surface on the hollow space side.

### <Spacer 128>

As shown in Fig. 3, a spacer 128 comprises an inner surface 132 and an outer surface 134 for maintaining the distance between the glass plate 122 and the glass plate 124, side surfaces 136 and 136 provided continuous to the inner surface 132 and outer surface 134, to face inside walls of the glass plates 122 and 124, and a plurality of spaces 140 to be filled with a desiccant 138 (see Fig. 1).

In the spacer 128, three rows of grooves 142 are provided on the inner surface 132 of the spacer 128 in order to hold a portion of the periphery of each of three intermediate glass plates 126A, 126B and 126C. The three rows of grooves 142 are formed in parallel along the longitudinal direction of the spacer 128, in order to dispose the three intermediate glass plates 126A, 126B and 126C to be parallel.

In the embodiment, by forming the grooves 142 for holding the intermediate glass plates 126 in the spacer 128, the space portion is divided into four spaces 140 in the lateral direction. The number of spaces 140 is determined according to the number of intermediate glass plates 126. The spacer 128 of the embodiment is integrally formed to have a plurality of spaces 140 and a plurality of grooves 142.

The spacer 128 is formed by molding a spacer forming material. As the molding method, it is possible to use a method of molding a spacer forming material, such as an extrusion molding method, a co-extrusion molding method, or an injection molding method.

As the spacer forming material, a synthetic resin material is preferably used. As the synthetic resin material for forming a spacer, a hard vinyl chloride resin material, an acrylonitrile-styrene resin material, and one having fiberglass material incorporated thereto, are preferred, but it is not limited to these thermoplastic synthetic resin materials, and various thermoplastic synthetic resin materials may be used.

Further, the spacer frame forming material is not limited to one type, and it may have a composite structure made of a plurality of materials. For example, it may be a frame member of a composite structure consisting of partially different synthetic resin materials formed by a co-extrusion molding method of different resin materials, or may be a frame member of a composite structure made of a synthetic resin material and an aluminum material. Such a composite structure may be integrally molded by any one of the spacer forming materials. In the integrally molded spacer 128, partly or entirely, different synthetic resin materials and/or metallic materials may be bonded. In particular, a spacer 128 formed by a hard vinyl chloride resin material and an acrylonitrile-styrene resin material is excellent in thermal insulation properties, when used as a multiple glazing sash 120, and it can easily be integrally molded and is excellent in durability and inexpensive.

In the grooves 142 of the spacer 128 of the embodiment, glazing channels 144 are fitted in order to support intermediate glass plates 126A, 126B and 126C, respectively. By the glazing channels 144, it is possible to easily closely fix the intermediate glass plates 126A, 126B and 126C, respectively, in the grooves 142 of the spacer 128. Further, it is also possible to change the thickness of each divided hollow space 130 by eccentrically adjusting the glazing channels 144. Further, at the time of temperature drop, even if the internal pressure of the divided hollow spaces 130 is reduced and the spacer 128 is deformed towards the divided hollow spaces 130, the glazing channels 144 are effective so that the pressure to be exerted to the intermediate glass plates 126A, 126B and 126C from the spacer 128, will be mitigated by the glazing channels 144.

Furthermore, the glazing channels 144 can be partially disposed in the grooves 142. By providing portions where glazing channels 144 are not provided in the grooves 142, the divided hollow spaces 130 can be made to communicate one another, and the pressure inside of the respective divided hollow spaces 130 can be equalized.

Thus, even if the volume of the divided hollow spaces 130 is increased or decreased by a temperature rise or temperature drop, it is possible to absorb an increase or decrease of the volume change by the entirety of the plurality of divided hollow spaces 130. In the case where the glazing channels 144 are partially provided, it is preferred that they are provided near the corners of each side of the intermediate glass plates 126A, 126B and 126C.

The glazing channels 144 are preferably made of a resin (e.g. a vinyl chloride resin or an urethane resin) or a rubber having a Shore A hardness of from 50 to 90 degrees. If the Shore A hardness is less than 50 degrees, it is too soft, and it becomes difficult to obtain a sufficient force for holding the intermediate glass plates 126A, 126B, 126C, and if the Shore A hardness exceeds 90 degrees, it is too hard, whereby it becomes difficult to fit in the intermediate glass plates 126A, 126B, 126C.

The glazing channels 144 are not limited to the shape shown in Figs. 1 and 3, and glazing channels 144 of other shapes may also be used.

In a case where the two glass plates 122 and 124 have a rectangular flat plate shape, the glass plates 122 and 124 are held to be spaced apart by four spacers 128 disposed in the vicinity of the periphery of the four sides.

### <Corner key 150>

Fig. 4 is a perspective view of a corner key 150 for connecting spacers 128 to each other.

At the four corners where the respective ends of spacers 128 are abutted, the adjacent spacers 128 are connected to each other by a corner key 150 as a spacer-connecting member, so that a continuous frame-shaped spacer is formed.

The spacer 128 has an end surface 160 facing the main body 152 of the corner key 150. Through-holes 162 are formed on the inner surface 132 of the spacer 128. The through-holes 162 are in communication with spaces 140.

The corner key 150 has a main body 152 and insertion portions 154 disposed to be protruded in an L-shape from the main body 152, and through-holes 156 are formed in the insertion portions 154. In the corner key 150, the insertion portions 154 disposed in an L-shape, are formed integrally with the main body 152 to correspond to the plurality of spaces 140 of the spacers 128.

The insertion portions 154 of the corner key 150 are inserted into the spaces 140 of the spacers 128 to such a position that the end surfaces 160 of the spacers 128 are in contact with the main body 152 of the corner key 150. The cross-sectional area of an insertion portion 154 is smaller than the cross-sectional area of a space 140, so that the insertion portion 154 is inserted with little contact with the inner wall of the space 140, whereby it is possible to prevent cracks or the like from forming in the spacer 128.

At the time of connecting a spacer 128 and a corner key 150, they are aligned at such positions that through-holes 162 of the spacer 128 and through-holes 156 of the insertion portions 154 of the corner key 150 will overlap, as viewed from the side of the inner surface 132. A screw 158 as a fixing member, is inserted from outside of the space 140 into a through-hole 162 of the spacer 128. The screw 158 passes through the inner surface 132 of the spacer 128 and reaches a through-hole 156 of the insertion portion 154. By screwing the screw 158 from outside of the space 140, the screw 158 is fastened to the through-hole 162 of the spacer 128 and the through-hole 156 of the insertion portion 154. Since the screw 158 extends through the spacer 128, it is possible to securely fix the spacer 128 and the insertion portion 154 of the corner key 150 by the screw 158.

Here, outside of the space 140 means, with respect to the space 140 formed in the interior of the spacer 128, the opposite side of the space 140 with the spacer 128 as the boundary. In the embodiment, an example is shown in which the screw 158 is inserted towards the space 140 from outside of the inner surface 132, but so long as from outside of the space 140, it is also possible to insert a screw 158 towards the space 140 from outside of the outer surface 134, or of the side surfaces 136 and 136.

In the embodiment, as a primer hole for the screw 158, a through-hole 162 is formed in the spacer 128, and a through-hole 156 is formed in the insertion portion 154, but, for example, in a case where a tapping screw is used as a screw 158 being a fixing member, it is also possible to open through-holes in the spacer 128 and the insertion portion 154 directly by the tapping screw.

In the embodiment, the spacer 128 is fixed to the corner key 150 at two positions of the spacer 128 close to the glass plates 122 and 124 by the screws 158, but the fixing is not limited to this. For example, it may be fixed at four positions where the spaces 140 are formed, or at two positions located inside of the spacer 128.

The corner key 150 having the main body 152 and the insertion portions 154, is preferably one which is integrally formed by a hard synthetic resin material (e.g. a hard polyvinyl chloride resin material or an acrylonitrile-styrene resin material, a polypropylene resin material). The integrally formed means that a corner key forming material is formed by an integral forming method such as a scraping method, a molding method, a shaping method by means of a 3D printer, or an injection molding method. Thus, if it is integrally formed, it is easy to piece the corner key 150 into a single member, it is possible to reduce the number of parts of the corner key 150, and the assembly process can also be simplified.

### <Divided hollow spaces 130>

In the four divided hollow spaces 130 shown in Figs. 1 and 3, argon gas having a thermal conductivity lower than air, is sealed in, so that the thermal insulation performance of the multiple glazing sash 120 is increased. Further, the argon gas is dried by the desiccant 138 accommodated in the spaces 140 of the spacer 128. Thus, dew condensation on the glass plates 122 and 124 and intermediate glass plates 126A, 126B and 126C, is prevented. Further, the thickness of the divided hollow spaces 130 is set to be from 13 mm to 17 mm i.e. the thickness that can sufficiently exhibit thermal insulation performance. In other words, the thickness of the divided hollow spaces 130 is set to have a width of ±2 mm added to the optimum value (15 mm) capable of exhibiting insulation performance maximally. The number of the divided spaces 130 is determined according to the number of intermediate glass plates 126.

In a case where a high thermal insulation property is not particularly required, dry air or other inert gas may be filled in the above divided hollow spaces 130.

### <Glass plates 122 and 124>

In usual many embodiments, the glass plates 122 and 124 are rectangular flat glass plates, and the respective thicknesses are preferably within a range of from 1.3 mm to 3 mm in order to reduce the weight, and the sizes of the glass plates 122 and 124 are the same or substantially the same sizes.

Further, the glass plates 122 and 124 may be different in thickness, so long as they are within the above mentioned range of the thicknesses. Further, the glass plates 122 and 124 are preferably chemically tempered glass having a sufficient strength even when the thickness is made thin. That is, by having the glass plates 122 and 124 made of chemically tempered glass, even with a thickness of from 1.3 mm to 3 mm, it is possible to obtain impact resistance performance and wind pressure resistance performance.

The chemically tempered glass plate is a glass plate having the strength increased by immersing a glass plate containing a Na component and Li component, such as soda-lime silicate glass, in a molten salt of potassium nitrate or the like, to replacing Na ions and/or Li ions having a small atomic diameter, present on the surface of the glass plate, by K ions having a large atomic diameter present in the molten salt, thereby to form a compressive stress layer on the surface layer of the glass plate. According to the chemically tempered glass, even a glass plate having a plate thickness of at most 2 mm, has sufficiently high breaking strength. Therefore, if chemically tempered glass plates are used as the glass plates 122 and 124, even by the glass plates 122 and 124 having a thickness of from 1.3 mm to 3 mm, sufficient strength is obtainable as the glass plates 122 and 124 to be disposed outside.

### <Intermediate glass plates 126A, 126B and 126C>

In usual many embodiments, the intermediate glass plates 126A, 126B and 126C are rectangular flat glass plates, the respective thicknesses are within a range of from 1 mm to 2 mm in order to reduce the weight, and the sizes of the intermediate glass plates 126A, 126B and 126C are the same, or substantially the same sizes.

The intermediate glass plates 126A, 126B and 126C, may be different in thickness, so long as they are in the above-mentioned range of the thickness. Further, similar to the glass plates 122 and 124, the intermediate glass plates 126A, 126B and 126C may be a chemically tempered glass having a sufficient strength even when the thickness is made thin. For example, chemically tempered glass having a thickness of from 1 mm to 2 mm, has static bending strength equivalent to non-tempered glass such as float glass having a thickness of from 3 mm to 6 mm.

Further, the intermediate glass plates 126A, 126B and 126C are preferably made to have a similar but smaller rectangular shape than the glass plates 122 and 124 so that they can be inserted into the grooves 142 of the spacer 128.

In the embodiment, three intermediate glass plates 126A, 126B and 126C are employed. In general, the intermediate glass plates 126 may be two or more between the glass plates 122 and 124. That is, the multiple glazing sash 120 is constituted by being provided with three intermediate glass plates 126. Therefore, according to the multiple glazing sash 120, even if the temperature of the divided hollow spaces 130 is lowered, and the internal pressure of the divided hollow spaces 130 is reduced, the ends of the intermediate glass plates 126 will support the spacer 128, and thus, it is possible to prevent the spacer 128 from being deformed towards the divided hollow spaces 130, by the intermediate glass plates 126.

### <Support plate 200>

As shown in Figs. 1 and 3, the support plate 200 is a member to support and reinforce the spacer 128. Therefore, the support plate 200 is installed at a position to face the outer surface 134 of each spacer 128 and along the outer surface 134 via a moisture permeation-preventing layer 190 which will be described later. Here, the moisture permeation-preventing layer 190 is not essential, and the support plate 200 may be installed so as to abut directly to the outer surface 134. Such support plates 200 are connected by a corner key 250.

According to the multiple glazing sash 120 of the embodiment, the spacers 128 are supported by the support plates 200, from outside thereof, whereby even if the internal pressure of the divided hollow spaces 130 increases and the spacer 128 tends to be bulged towards the opposite side of the divided hollow spaces 130, it is possible to prevent the spacer 128 from being bulged outside, by the support plates 200.

Depending on the construction of the multiple glazing sash 120, the thickness of the hollow space between the glass plates 122 and the glass plate 124 becomes very thick as compared with a double-glazing usually consisting of two glass plates. Therefore, the pressure which the spacer 128 receives from the thermally expanded hollow space becomes very large as compared with the double-glazing, and there may be a case where it is not possible to cope with the pressure by the spacer 128 alone. Further, in a case where the spacer 128 is made of a resin, it has a property of being easily bulged as compared with a metal. Therefore, in the multiple glazing sash 120 of the embodiment, a support plate 200 is provided to support outside of the spacer 128, to reinforce the spacer 128, and to suppress the bulging of the spacer 128, whereby it is possible to counteract to the above-mentioned increased internal pressure. Thus, it is possible to provide a multiple glazing sash 120 having a long service life. Further, the support plate 200 has, in its cross section, a hollow structure having four hollows 202 therein.

As regards the shape of the support plate 200, for example, the support plate 200 has, in order to support the spacer 128, a substantially same length as the spacer 128 and has a width less than the width of the spacer 128.

Further, the support plate 200 is accommodated in a space surrounded by the inner wall of the glass plate 122, the inner wall of the glass plate 124, and the outer surface 134 of the spacer 128. Further, between one outer wall of the support plate 200 and the inner wall of the glass plate 122, and between the other outer wall of the support plate 200 and the inner wall of the glass plate 124, a secondary sealing material 182 as a sealing material is filled.

In the embodiment, the support plate 200 is integrally formed to have a plurality of hollows 202. The support plate 200 is molded by a support plate forming material. As a molding method for molding a support plate forming material, a molding method such as an extrusion molding method, a co-extrusion molding or an injection molding method may be used.

As the support plate forming material, a synthetic resin material is preferably used. The synthetic resin material for forming the support plate is preferably a hard vinyl chloride resin material, an acrylonitrile-styrene resin material, or one having glass fiber incorporated thereto, but is not limited to such thermoplastic resin materials, and various thermoplastic synthetic resin materials may be used.

Further, the support frame forming material is not limited to one type and may be of a composite structure having a plural types of materials used. For example, it may be a frame body of a composite structure consisting of partially different synthetic resin materials made by a co-extrusion molding method from different resin materials, or may be a frame body of a composite structure made of a synthetic resin material and an aluminum material. In the case of this composite structure, it may be integrally molded by any one of the spacer-forming materials. The integrally molded support plate 200 may have different synthetic resin materials and/or metallic materials bonded, in part or in whole. In particular, the support plate 200 formed by a hard vinyl chloride resin material or acrylonitrile-styrene resin material is excellent in thermal insulation properties, when used in a multiple glazing sash 120, can easily be integrally molded and is excellent in durability and inexpensive.

### <Corner key 250>

Fig. 5 is a perspective view of a corner key 250 for connecting support plates 200 to each other.

At four corners where the respective ends of support plates 200 are abutted, the adjacent support plates 200 are connected to each other by a corner key 250 being a support plate connecting member, so that a continuous frame-form spacer is formed.

A support plate 200 has an end surface 230 which faces the main body 252 of the corner key 250. Through-holes 232 are formed in the outer surface 214 of the support plate 200. The through-holes 232 extend to hollows 202.

A corner key 250 has a main body 252 and insertion portions 254 protruded from the main body 252 and disposed in an L-shape, and through-holes 256 are formed in the insertion portions 254. In the corner key 250, the insertion portions 254 disposed in an L-shape, are formed integrally with the main body 252 to correspond to the plurality of hollows 202 of the support plates 200.

The insertion portions 254 of the corner key 250 are to be inserted into hollows 202 of the support plates 200 to a position where the end faces 230 of the support plates 200 are in contact with the main body 252 of the corner key 250. The cross-sectional area of an insertion portion 254 is smaller than the cross-sectional area of a hollow 202, and the insertion portion 254 is not substantially in contact with the inner wall of the hollow 202, whereby it is possible to prevent formation of cracks in the support plate 200.

At the time of connecting the support plate 200 and the corner key 250, the positions of the through-holes 232 of the support plate 200 and the through-holes 256 of the insertion portions 254 of the corner key 250, are adjusted to be overlapping. A screw 258 being a fixing member is inserted into a through-hole 232 of the support plate 200 from the outer surface 214. The screw 258 passes through the support plate 200 and reaches a through-hole 256 of the insertion portion 254. By screwing the screw 258 from outside of the outer surface 214, the screw 258 is fastened to the through-hole 232 of the support plate 200 and the through-hole 256 of the insertion portion 254. Since the screw 258 extends through the support plate 200, it is possible to securely fix the support plate 200 and the insertion portion 254 of the corner key 250 by the screw 258.

In the embodiment, as a primer hole for the screw 258, a through-hole 232 is formed in the support plate 200, and a through-hole 256 is formed in the insertion portion 254, but, for example, in a case where a tapping screw is used as the screw 258 as a fixing member, it is possible to directly form through-holes in the support plate 200 and the insertion portion 254 by the tapping screw.

In the embodiment, the support plate 200 is fixed to the corner key 250 at two positions of the support plate 200 close to the glass plates 122 and 124 by the screws 258, but the fixing is not limited to this. For example, it may be fixed at four positions where the hollow 202 are formed, or at two positions located inside of the support plate 200.

The corner key 250 having the main body 252 and the insertion portions 254, is preferably one which is integrally formed by a hard synthetic resin material (e.g. a hard polyvinyl chloride resin material or an acrylonitrile-styrene resin material). The integrally formed means that the corner key forming material is formed by an integral forming method such as a scraping method, a molding method, a shaping method by means of a 3D printer, or an injection molding method. Thus, if it is integrally formed, it is easy to piece the corner key 250 into a single member, it is possible to reduce the number of parts of the corner key 250, and the assembly process can also be simplified.

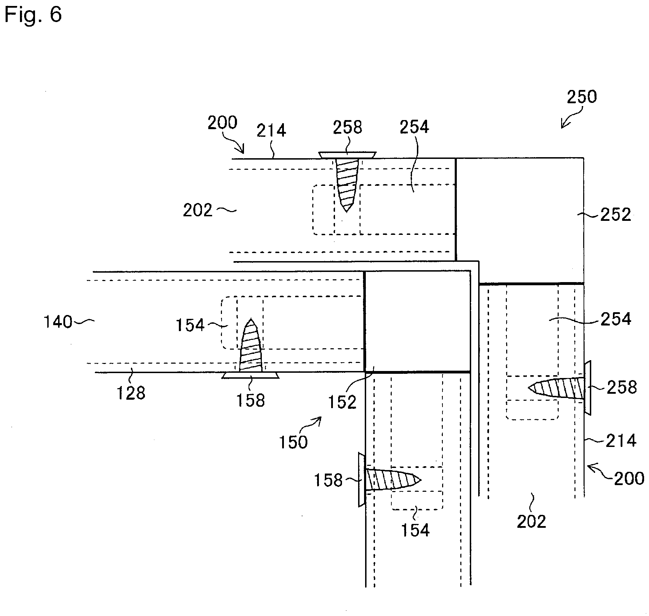

Fig. 6 is a schematic illustration showing a state where spacers 128 and the corner key 150 are connected by screws 158, and a state where support plates 200 and the corner key 250 are connected by screws 258. As shown in Fig. 6, on outside of the spacers 128, the support plates 200 are disposed, and the spacers 128 are supported and reinforced by the support plates 200.

### <Sealing material 180, secondary sealing material 182>

As shown in Figs. 1 and 3, the multiple glazing sash 120 is provided with a sealing material 180, and a secondary sealing material 182. Side surfaces 136 and 136 of the spacer 128 facing to the glass plate 122 and the glass plate 124 are bonded to the glass plate 122 and the glass plate 124 by butyl rubber as a sealing material 180.

Then, a polysulfide type or silicone type sealing material as a secondary sealing material 182 is filled on the side of the outer surface 134 of the spacer 128. Thus, a multiple glazing sash 120 is constructed. The sealing material 180 and the secondary sealing material 182 are not limited to the above embodiments, and the sealing material for bonding the glass plates 122 and 124, and the sealing material to be applied to the side of the outer surface 134 of the spacer 128, may be the same material. Further, for protecting the secondary sealing member 182, another sealing member may be provided on the outer periphery of the secondary sealing member 182.

### <Moisture permeation-preventing layer 190>

As shown in Figs. 1 and 3, a moisture permeation-preventing layer 190 is formed to prevent moisture from permeating from outside to the side of the divided hollow spaces 130 of the multiple glazing sash 120. In particular, in a case where the spacer 128 is made of a synthetic resin material, such as a hard polyvinyl chloride resin material or an acrylonitrile-styrene resin material, the material itself is required to have a moisture permeation-preventing property at a level equal to or higher than an aluminum spacer having a high moisture permeation-preventing property.

As the moisture permeation-preventing layer 190, one made of a material capable of preventing moisture from permeating through the spacer 128 itself into the divided hollow spaces 130, is selected. The moisture permeation-preventing layer 190 is preferably a layer having a moisture permeation-preventing coating material applied and cured, or a layer having a moisture permeation-preventing film-form member bonded. The moisture permeation-preventing coating material may typically be a fluororesin-type coating material, a polyvinylidene chloride resin-type coating material, etc. In the case of forming a moisture penetration preventing layer by application of a moisture permeation-preventing coating material, it may be made to have a multi-layered structure of two or more layers by applying two or more types of moisture permeation-preventing coating materials.

The moisture permeation-preventing film-form member may, for example, be a metal-coated film having a moisture permeation-preventing performance, a ceramic coating film, a composite coating film of metal and ceramic, a metal tape, a moisture preventing resin film made of such a resin that the film itself has a moisture permeation-preventing performance, or a moisture permeation-preventing resin-coated film. Also, a moisture permeation-preventing film-form member prepared by laminating a butyl tape made from a butyl rubber-type adhesive material, and a metal tape, such as an aluminum foil or stainless steel foil, may be preferably used.

Further, as shown in Fig. 1, the spacer 128 has spaces 140, and it is possible to fill a desiccant 138 such as zeolite or silica gel in the spaces 140. By the desiccant 138, it is possible to dry a gas in the divided hollow spaces 130. Here, the desiccant 138 is exposed to the divided hollow spaces 130 by openings (not shown) formed in the inner surface 132 of the spacer 128.

In the embodiment, the support plate 200 is provided, whereby it is possible to protect the moisture permeation-preventing layer 190. The above is the construction of the multiple glazing sash 120.

### [Characteristics of multiple glazing sash 120]

As shown in Fig. 1, low-emissivity films 166A, 166B, 166C and 166D such as Low-E films are formed on the inner surfaces of the glass plates 122 and 124 facing the divided hollow spaces 130, and on the inner surfaces of the intermediate glass plates 126A and 126 C facing the intermediate glass plate 126B. That is, the glass plates 122 and 124, and the intermediate glass plates 126A and 126C are constructed as Low-E glass.

The Low-E glass is one prepared by forming, on the surface of a glass plate, a low-emissivity film composed mainly of e.g. tin oxide (SnO₂) by using e.g. a chemical vapor deposition apparatus or a sputtering apparatus, or a low-emissivity film composed mainly of silver (Ag) by using e.g. a sputtering apparatus, and has a function to lower the emissivity of the thermal energy by infrared rays. Here, the low-emissivity film composed mainly of silver (Ag) includes of such a type that a silver film is laminated with e.g. an oxide film, a nitride film or the like. That is, the Low-E glass has a nature to hardly transmit heat, and thus has high heat shielding and thermal insulation properties. Further, the low-emissivity film composed mainly of silver has a property to be easily oxidized by e.g. moisture in air, and therefore, when used in double glazing, it is preferably formed on the side facing a sealed hollow space. Further, the low-emissivity film composed mainly of tin oxide has, as compared with the low-emissivity film composed mainly of silver, a low reflective performance of heat rays and low thermal barrier performance, but has a merit in that as compared with the low-emissivity film composed mainly of silver, it is less likely to be oxidized, and it is less likely to be scratched because of high mechanical durability.

The emissivities of low-emissivity film 166A, 166B, 166C and 166D may be differentiated. It is thereby possible to prevent, while ensuring the thermal insulation performance, the temperature rise of the divided hollow spaces 130 and the temperature rise of the intermediate glass plates 126A, 126B and 126C, so that it is possible to prevent thermal breakage of the intermediate glass plates 126A, 126B and 126C.

As to the causes of thermal breakage, the temperature of the divided hollow spaces 130 is increased upon receipt of the solar radiation (especially morning sun light), whereby the temperature of the main surfaces except the edges of three intermediate glass plates 126A, 126B and 126C will increase. At that time, if the temperature difference between the edges and the main surfaces becomes large, a tensile stress will be formed at the edges, and when the stress exceeds the tolerance level (edge allowable stress: 17.7 MPa), thermal breakage may occur at the edges. That is, since the edges are held in the window frame 20 and the attachment frame 110, the temperature rise of the edges depends on the window frame 20 and the attachment frame 110 which show a slower temperature rise than the main surfaces. Therefore, a temperature difference is formed between the edges and the main surfaces, and thermal breakage is formed at the edges due to the temperature difference.

In order to prevent such thermal breakage in a multiple glazing sash 120, a low-emissivity film 166A with a relatively low of emissivity, is formed on the inner surface of the glass plate 122 on the outdoor side. On a surface of the intermediate glass plate 126A facing the intermediate glass plate 126B, a low-emissivity film 166B with a higher emissivity than the low-emissivity film 166A is formed. On a surface of the intermediate glass plate 126C facing the intermediate glass plate 126B, a low-emissivity film 166C with a higher emissivity than the low-emissivity film 166A is formed. On the inner surface of the glass plate 124 on the indoor side, a low-emissivity film 166D with a higher emissivity than the low-emissivity film 166A is formed. The low-emissivity films 166B, 166C and 166D may be ones with the same emissivity or with different emissivities. The intermediate glass plate 126B disposed at the center is a usual transparent glass plate having no low-emissivity film.

Here, the low-emissivity film 166B may be formed on a surface facing the glass plate 122. Further, the low-emissivity film 166C may be formed on a surface facing the glass plate 124.

By providing a low-emissivity film 166A with a relatively low of emissivity on the glass plate 122 on the outdoor side, it is possible to suppress the temperature rise inside of the divided hollow spaces 130, whereby it is possible to suppress the temperature rise of the intermediate glass plate 126A, 126B and 126C. Further, by using a usual transparent glass plate having no low-emissivity film as the intermediate glass plate 126B at the center, it is possible to suppress the temperature rise of the intermediate glass plate 126B. Thus, it is possible to prevent thermal breakage of the intermediate glass plate 126B, of which the edge stress otherwise tends to be higher than the intermediate glass plates 126A and 126C. Here, only the intermediate glass plate 126A, or only the intermediate glass plate 126C, may be a usual transparent glass plate having no low-emissivity film.

On the other hand, since the low-emissivity films 166B and 166C of the intermediate glass plates 126A and 126C have a higher emissivity than the low-emissivity film 166A, it is possible to suppress the temperature rise of the intermediate glass plates 126A and 126C due to solar heat. Thus, it is possible to prevent thermal breakage of the intermediate glass plate 126A and 126C, due to the temperature rise of the intermediate glass plates 126A and 126C.

As described above, according to the multiple glazing sash 120 of the embodiment, it is possible to suppress the temperature rises of the intermediate glass plates 126A, 126B and 126C and the divided hollow spaces 130, and to lower the edge stress of the intermediate glass plates 126A, 126B and 126C, whereby it is possible to prevent thermal breakage of the intermediate glass plates 126A, 126B and 126C, while securing thermal insulation performance.

As an example of the emissivity of the glass plates 122 and 124, and intermediate glass plates 126A and 126C, it is possible to set the emissivity of the glass plate 122 to be from 0.03 to 0.04, the emissivity of the glass plate 124 and the intermediate glass plates 126A and 126C to be from 0.04 to 0.05. The emissivity of the intermediate glass plate 126B as a usual glass plate is from 0.8 to 0.9.

Further, the optical properties of the intermediate glass plate 126B made of a usual transparent glass plate having no low-emissivity film, are, for example, such that the visible light transmittance Tv is from 89 to 92%, and the solar radiation transmittance is from 82 to 91%.

Cracking may be suppressed also by providing a thermal insulation material 260 (see Fig. 1) in the hollows 202 of the support plate 200. That is, it is possible to reduce the temperature difference between the main surfaces and the edges of the intermediate glass plates 126A, 126B and 126C by preventing the glass edges from being cooled at night, by the thermal insulation material 260. Thus, it is possible to prevent the thermal breakage of the intermediate glass plates 126A, 126B and 126C. Further, it is possible to suppress thermal breakage also by providing a thermal insulation material at the window frame 20 or at the lower surface of the attachment frame 110.

In the embodiment, a multiple glazing sash 120 having three intermediate glass plates 126A, 126B and 126C, has been described.

As disclosed herein, in a multiple glazing sash consisting of five glass plates, it is possible to prevent thermal breakage of intermediate glass plates while securing thermal insulation performance.

### REFERENCE SYMBOLS

20: window frame, 50: batten, 52: air-tight material, 100: window, 110: attachment frame, 120: multiple glazing sash, 122, 124: glass plate, 126, 126A, 126B, 126C: intermediate glass plate, 128: spacer (first frame member), 130: divided hollow space, 132: inner surface, 134: outer surface, 136: side surface, 138: desiccant, 140: space, 142: groove, 144: glazing channel, 150: corner key, 152: main body, 154: insertion portion, 156: through-hole, 158: screw, 160: end face, 162: through-hole, 166A, 166B, 166C, 166D: low-emissivity film, 180: sealing material, 182: secondary sealing material, 190: moisture permeation-preventing layer, 200: support plate (second frame member), 202: hollow, 214: outer surface, 232: through-hole, 250: corner key, 252: main body, 254: insertion portion, 256: through-hole, 258: screw, 260: thermal insulation material.

## Claims

1. A multiple glazing sash having a first glass plate and a second glass plate held at their periphery by a first frame member, to be spaced apart to form a hollow space, the hollow space being sealed by the first frame member at said periphery, and in the hollow space, three intermediate glass plates being held by the first frame member, wherein
each of the first glass plate and the second glass plate has a low-emissivity film, at least one intermediate glass plate among the above three intermediate glass plates has a low-emissivity film, and
the intermediate glass plate disposed at the center among the three intermediate glass plates is a transparent glass plate having no low-emissivity film.

2. The multiple glazing sash according to Claim 1, which has such a construction that the first glass plate is disposed on the outdoor side of a building, and the second glass plate is disposed on the indoor side of the building, wherein the emissivity of the first glass plate disposed on the outdoor side is lower than the emissivity of the second glass plate and the intermediate glass plate having a low-emissivity film.

3. The multiple glazing sash according to Claim 1 or 2, which is provided with a second frame member for supporting said first frame member, wherein said second frame has hollows, and a thermal insulation material is disposed in the hollows.

## Patentansprüche

1. Mehrfachverglasungflügel mit einer ersten Glasplatte und einer zweiten Glasplatte, welche an ihrer Peripherie von einem ersten Rahmenelement gehalten werden, um zum Bilden eines Hohlraums beabstandet zu sein, wobei der Hohlraum durch das erste Rahmenelement an der Peripherie versiegelt ist und in dem Hohlraum drei Zwischenglasplatten von dem ersten Rahmenelement gehalten werden, wobei
jede der ersten Glasplatte und der zweiten Glasplatte einen Film mit niedrigem Emissionsvermögen aufweist,
mindestens eine Zwischenglasplatte der vorstehenden drei Zwischenglasplatten einen Film mit niedrigem Emissionsvermögen aufweist und
die Zwischenglasplatte, welche im Zentrum der drei Zwischenglasplatten angeordnet ist, eine transparente Glasplatte ohne Film mit niedrigem Emissionsvermögen ist.

2. Mehrfachverglasungsflügel nach Anspruch 1, welcher eine derartige Konstruktion aufweist, dass die erste Glasplatte an der Außenseite eines Gebäudes angeordnet ist und die zweite Glasplatte auf der inneren Seite des Gebäudes angeordnet ist, wobei das Emissionsvermögen der ersten Glasplatte, angeordnet an der äußeren Seite, niedriger als das Emissionsvermögen der zweiten Glasplatte und der Zwischenglasplatte mit einem Film mit niedrigem Emissionsvermögen ist.

3. Mehrfachverglasungsflügel nach Anspruch 1 oder 2, welcher mit einem zweiten Rahmenelement zur Stützung des ersten Rahmenelements ausgestattet ist, wobei der zweite Rahmen Hohlräume aufweist und ein thermisches Isoliermaterial in den Hohlräumen angeordnet ist.

## Revendications

1. Châssis à vitrage multiple comportant une première plaque de verre et une deuxième plaque de verre qui sont retenues, sur leur périphérie, par un premier élément de cadre, pour être espacées afin de former un espace vide, ledit espace vide étant rendu étanche par le premier élément de cadre, sur ladite périphérie, et trois plaques de verre intermédiaires étant retenues dans l'espace vide par le premier élément de cadre, chacune des première et deuxième plaques de verre présentant un film à faible émissivité, au moins une plaque de verre intermédiaire, parmi les trois plaques de verre intermédiaires, présentant un film à faible émissivité, et la plaque de verre intermédiaire disposée au milieu, parmi les trois plaques de verre intermédiaires, étant une plaque de verre transparent qui ne présente pas de film à faible émissivité.

2. Châssis à vitrage multiple selon la revendication 1, qui présente une construction telle que la première plaque de verre est disposée sur le côté extérieur d'un bâtiment, et que la deuxième plaque de verre est disposée sur le côté intérieur du bâtiment, l'émissivité de la première plaque de verre disposée sur le côté extérieur étant inférieure à celle de la deuxième plaque de verre, et la plaque de verre intermédiaire présentant un film à faible émissivité.

3. Châssis à vitrage multiple selon la revendication 1 ou 2, qui est pourvu d'un deuxième élément de cadre pour supporter le premier élément de cadre, ledit deuxième cadre présentant des creux, et un matériau d'isolation thermique étant disposé dans les creux.
